# FASCICULE DE BREVET EUROPEEN

(11) **EP 3 059 120 B1**
(45) Date de publication et mention de la délivrance du brevet: **17.04.2019**
(21) Numéro de dépôt: 16155924.0
(22) Date de dépôt: 16.02.2016
(51) Int. Cl.: B60Q 1/30, B60Q 3/74, B60Q 3/64, F21S 43/14, F21S 43/37, F21S 43/33, F21S 43/40, F21S 43/20, B60Q 1/26

(54) **DISPOSITIF D'ÉCLAIRAGE DE VÉHICULE AUTOMOBILE**
BELEUCHTUNGSVORRICHTUNG FÜR KRAFTFAHRZEUG
LIGHTING DEVICE FOR A MOTOR VEHICLE

(30) Priorité: 19.02.2015 FR 1551437
(43) Date de publication de la demande: 24.08.2016
(73) Titulaire: VALEO VISION, 93012 Bobigny Cedex (FR)
(72) Inventeur: DUBOSC, Christophe, 93250 VILLEMOMBLE (FR)

(56) Documents cités:
- EP-A1- 2 511 136
- FR-A1- 2 913 710
- FR-A1- 2 994 548
- JP-A- H0 986 273
- US-A1- 2010 080 010
- US-A1- 2013 003 404

## Description

La présente invention appartient au domaine de l'éclairage de véhicules. Elle concerne en particulier un dispositif d'éclairage, dans lequel un éclairage apparent est généré depuis une paroi extérieure réfléchissante.

L'invention est particulièrement avantageuse quand elle est intégrée dans des feux d'un véhicule automobile, notamment des feux de signalisation.

On entend par « feu de signalisation » d'un véhicule un dispositif d'éclairage ayant une fonction principale de signalisation du véhicule auprès d'autres véhicules, piétons, animaux, etc.

On entend par « véhicule automobile » tout type de véhicule sur roue apte à se déplacer par ses propres moyens tel qu'une voiture de tourisme, un poids lourd, une motocyclette, un tracteur, un utilitaire, etc. Les feux d'un véhicule automobile comportent habituellement un boîtier dans lequel est disposée une source lumineuse. Cette source lumineuse génère des faisceaux lumineux qui se propagent dans le boîtier puis traversent par exemple une glace de protection transparente destinée à protéger la source lumineuse située dans le boîtier.

Une compacité réduite et un coût restreint sont imposés lors de la conception des dispositifs lumineux. En particulier, le boîtier doit pouvoir s'encastrer facilement dans la carrosserie de la voiture. Ceci a notamment pour conséquence de réduire l'étendue de la surface d'émission lumineuse des feux. Pour un feu, ces surfaces d'émission dépassent ainsi rarement 20cm par 10cm, dans le sens horizontal ou dans le sens vertical.

En outre, les concepteurs de dispositifs d'éclairage doivent désormais déployer des trésors d'ingéniosité pour proposer aux grands constructeurs automobiles certains aspects décoratifs exclusifs. Les feux classiques mentionnés ci-avant limitent au boîtier ou à la glace de protection la création de décorations.

Par exemple, le document EP1191280 décrit notamment un dispositif de signalisation pour véhicule automobile dans lequel un élément de décoration est rendu visible par différentes réflexions intervenant au sein du boîtier. Dans ce document, l'élément de décoration est limité à la glace de protection et au boîtier.

Le document US 2013/003404 A1 décrit un dispositif d'éclairage selon le préambule de la revendication 1.

De plus, la réglementation actuelle impose des dimensions et intensités lumineuses souvent incompatibles avec des éléments de décoration de dimensions trop importantes, sauf à augmenter la taille globale du dispositif d'éclairage. Comme cela est mentionné ci-avant, une telle augmentation globale des dimensions du dispositif n'est pas envisageable en raison de contraintes liées à la compacité et au coût.

Les possibilités en termes d'étendue de la surface d'émission lumineuse et de création de dispositifs décoratifs des feux actuels sont donc limitées par les solutions techniques actuellement proposées pour ces feux classiques.

La présente invention vient améliorer la situation.

A cet effet, un premier aspect de l'invention concerne un dispositif d'éclairage pour véhicule automobile, caractérisé en ce qu'il comporte :
- une paroi comportant au moins une excroissance ; et
- au moins une première source lumineuse située à l'intérieur de ladite excroissance ;
et en ce que la paroi comporte une zone réfléchissante présentant des propriétés de réflexion lumineuse, et aménagée en regard de la première source lumineuse, de telle sorte que la première source lumineuse soit apte à générer un faisceau lumineux traversant la paroi, se propageant à l'extérieur du dispositif d'éclairage avant de se réfléchir sur la zone réfléchissante de la paroi pour générer un éclairage apparent depuis la paroi.

On entend par un matériau « réfléchissant » un matériau ayant des propriétés de réflexion de type diffus et/ou spéculaire.

On entend par « faisceau lumineux se réfléchissant sur la zone réfléchissante » une réflexion du faisceau lumineux sur la paroi vers l'extérieur par rapport au dispositif d'éclairage. Comme expliqué ci-après, la paroi au niveau de la zone réfléchissante peut être une double paroi dans laquelle une paroi externe est translucide et protège une paroi interne qui présente, au moins sur un côté, des propriétés de réflexion de la lumière.

Un éclairage apparent est généré par réflexion sur la paroi du dispositif d'éclairage vers l'extérieur. Cet éclairage apparent n'est pas nécessairement limité par les contraintes de compacité et de coût habituellement présentes pour les feux classiques.

La paroi du dispositif d'éclairage se présente sous la forme d'une pièce unique dont certaines parties présentent des propriétés optiques différentes. Les coûts associés à la production et l'installation d'un tel dispositif lumineux peuvent être réduits par rapport à un dispositif classique pour lequel il faut prévoir un assemblage parfois complexe des différentes pièces (source lumineuse, glace de protection, boîtier, etc.) constituant le dispositif lumineux.

La surface sur laquelle le faisceau lumineux est réfléchi peut s'étendre sur une zone relativement importante. Les faisceaux lumineux sont en effet ici réfléchis à l'extérieur du dispositif d'éclairage (sur la zone réfléchissante de la paroi). L'étendue de la surface d'émission lumineuse n'est plus nécessairement réduite aux dimensions du boîtier à encastrer dans la carrosserie du véhicule.

Par exemple, sur un véhicule utilitaire, on peut prévoir l'excroissance au niveau du haut de la face arrière du véhicule (proche du toit) et la paroi se prolongeant sur la face arrière avec par exemple la zone réfléchissante s'étendant sur toute la face arrière du véhicule utilitaire.

Dans un mode de réalisation, la zone réfléchissante présente un taux de réflexion d'au moins 30 %. Ainsi, les faisceaux lumineux générés par la première source lumineuse sont suffisamment réfléchis pour être correctement visibles depuis l'extérieur du véhicule.

Dans un autre mode de réalisation, l'excroissance comporte une première surface de sortie de lumière aménagée en regard de la zone réfléchissante pour qu'un faisceau lumineux généré par la première source lumineuse se réfléchisse sur la zone réfléchissante. Ainsi, l'excroissance protège la première source lumineuse mais, grâce à la surface de sortie de lumière aménagée dans cette excroissance, laisse passer les faisceaux lumineux générés par la première source lumineuse.

On entend par « excroissance comportant une surface de sortie de lumière» toute excroissance pour laquelle la paroi de l'excroissance présente au moins une zone apte à laisser passer un faisceau lumineux généré par une source lumineuse située à l'intérieur de l'excroissance.

Dans un mode de réalisation, l'excroissance comporte en outre une deuxième surface de sortie de lumière aménagée pour qu'un faisceau lumineux généré par la première source lumineuse et/ou une source lumineuse auxiliaire située dans l'excroissance, se propage directement vers l'espace extérieur sans être réfléchi sur la zone réfléchissante. L'utilisation de l'excroissance est ainsi optimisée car elle protège simultanément la première source lumineuse et/ou la source lumineuse auxiliaire.

En particulier, la première surface de sortie de lumière et/ou la deuxième surface de sortie de lumière peut comprendre un matériau possédant des propriétés de transmission lumineuse. Ce matériau joue ici le double rôle de protection de la source lumineuse et de transmission des faisceaux lumineuse générés par la première source lumineuse.

On entend par «surface de sortie de lumière (...) comprend un matériau» que le matériau comble la surface de sortie de lumière, au niveau de la paroi entre l'espace extérieur au dispositif et l'espace intérieur au dispositif.

Selon l'invention, la paroi délimite un espace intérieur au dispositif d'éclairage et un espace extérieur au dispositif d'éclairage. Le dispositif d'éclairage comporte en outre au moins une deuxième source lumineuse située dans l'espace intérieur, au niveau de la zone réfléchissante présentant des propriétés de réflexion lumineuse. Ainsi, la zone réfléchissante présentant des propriétés de réflexion lumineuse présente également des propriétés de transmission de sorte qu'un faisceau lumineux généré par la deuxième source lumineuse puisse traverser la paroi au moins au niveau de la partie de la zone réfléchissante.

La paroi, au niveau de la partie de la zone réfléchissante mentionnée ci-dessus, présente donc des propriétés de réflexion et de transmission lumineuse. Les possibilités d'effets décoratifs rendues possibles par de telles caractéristiques techniques sont très nombreuses.

En outre, les effets optiques rendus possibles par la combinaison de la réflexion et de la transmission rendent possible une limitation du nombre de composants utilisés pour faire les feux d'un véhicule. En effet, il est par exemple possible, typiquement pour un éclairage intérieur du véhicule, de jouer sur des mélanges de couleurs entre les faisceaux lumineux réfléchis et les faisceaux lumineux transmis afin d'éviter d'avoir à prévoir une source lumineuse par couleur. Ou des variations de couleurs, des variations d'intensité lumineuse ou d'aspect plus ou moins diffusant ou spéculaire peuvent être réalisés. Pour un éclairage extérieur, il est en outre par exemple possible de juxtaposer une fonction stop par réflexion externe sur la zone réfléchissante avec une fonction feu de position réalisée par transmission à travers la zone réfléchissante.

Dans un mode de réalisation, la partie de la zone réfléchissante présentant également des propriétés de transmission de la lumière présente un taux de transmission d'au moins 30%.

Dans un autre mode de réalisation, la première et/ou la deuxième source lumineuse comporte au moins une diode électroluminescente. Les propriétés de compacité et d'intensité de la lumière émise par une diode électroluminescente améliorent l'encombrement et l'efficacité du dispositif.

Dans un mode de réalisation, la paroi est fabriquée par moulage par injection. La fabrication du dispositif d'éclairage est ainsi grandement simplifiée et les coûts associés à une telle fabrication sont réduits.

Un deuxième aspect de l'invention concerne un feu de signalisation d'un véhicule automobile, le feu étant formé par le dispositif d'éclairage décrit ci-avant.

Dans un exemple ne correspondant pas à l'invention, le feu est situé sur la face arrière du véhicule, le véhicule automobile comprenant une porte arrière. La porte arrière comporte alors une zone réfléchissante de porte présentant des propriétés de réflexion lumineuse et aménagée en regard de la première et/ou deuxième source lumineuse, de telle sorte que la première et/ou deuxième source lumineuse soit apte à générer un faisceau lumineux se réfléchissant sur la zone réfléchissante de porte pour générer un éclairage apparent depuis ladite zone réfléchissante de porte.

On entend par « porte arrière » toute partie de la carrosserie du véhicule qui soit apte à fermer au moins une partie de la face arrière du véhicule. Typiquement, quand le véhicule dispose d'un coffre, cette porte arrière vient fermer le coffre.

Le caractère mobile de la porte arrière rend difficile et coûteux l'intégration de sources lumineuses au niveau de cette porte. Ici, une partie du coffre est éclairée sans qu'aucune source lumineuse n'ait à être prévue au niveau du coffre grâce à la réflexion sur la zone réfléchissante de coffre.

D'autres caractéristiques et avantages de l'invention apparaîtront à l'examen de la description détaillée ci-après, et des dessins annexés sur lesquels :
- la figure 1 illustre un contexte d'intégration d'un dispositif d'éclairage sur un véhicule automobile, selon un mode de réalisation de l'invention ;
- la figure 2 est une vue d'ensemble d'un dispositif d'éclairage, selon un mode de réalisation de l'invention ;
- la figure 3A est une première vue en coupe d'un dispositif d'éclairage, selon un premier exemple ne comportant pas toutes les caractéristiques techniques de l'invention ;
- la figure 3B est une deuxième vue en coupe d'un dispositif d'éclairage, selon le premier exemple ;
- la figure 4A illustre un dispositif d'éclairage, selon le premier exemple ;
- la figure 4B illustre un dispositif d'éclairage, selon un mode de réalisation de l'invention ;
- la figure 5 est une vue d'ensemble d'un dispositif d'éclairage, selon le deuxième mode de réalisation de l'invention ;
- la figure 6 est une vue en perspective de la paroi d'un dispositif d'éclairage, selon un mode de réalisation de l'invention ;
- la figure 7A présente une illustration en trois dimensions d'un dispositif d'éclairage, dans un état éteint, selon le premier exemple ;
- la figure 7B illustre le dispositif de la figure 7A, dans un état allumé, selon le premier exemple ;
- la figure 7C présente une illustration en trois dimensions d'un dispositif d'éclairage, dans un état allumé, selon un autre mode de réalisation de l'invention ;
- la figure 8 illustre un dispositif d'éclairage intégré dans la face arrière d'un véhicule, selon un exemple ne comportant pas toutes les caractéristiques techniques de l'invention ;
- la figure 9A illustre un contexte d'intégration d'un dispositif d'éclairage, selon un mode de réalisation de l'invention, pour une autre application de l'invention ;
- la figure 9B est une vue d'ensemble d'un dispositif d'éclairage, selon un mode de réalisation de l'invention, pour l'autre application de l'invention ;
- la figure 9C illustre le détail d'un dispositif d'éclairage, selon un mode de réalisation de l'invention, pour l'autre application de l'invention.

L'invention est décrite ci-après dans son application, non limitative, aux feux de signalisation arrière ou avant d'un véhicule automobile. D'autres applications, par exemple, à un éclairage intérieur d'un véhicule automobile ou encore à des dispositifs d'éclairage décoratif (de type « tuning » pour personnalisation automobile en français) par exemple de poids lourds sont également envisageables. Certaines de ces applications sont également décrites ci-après.

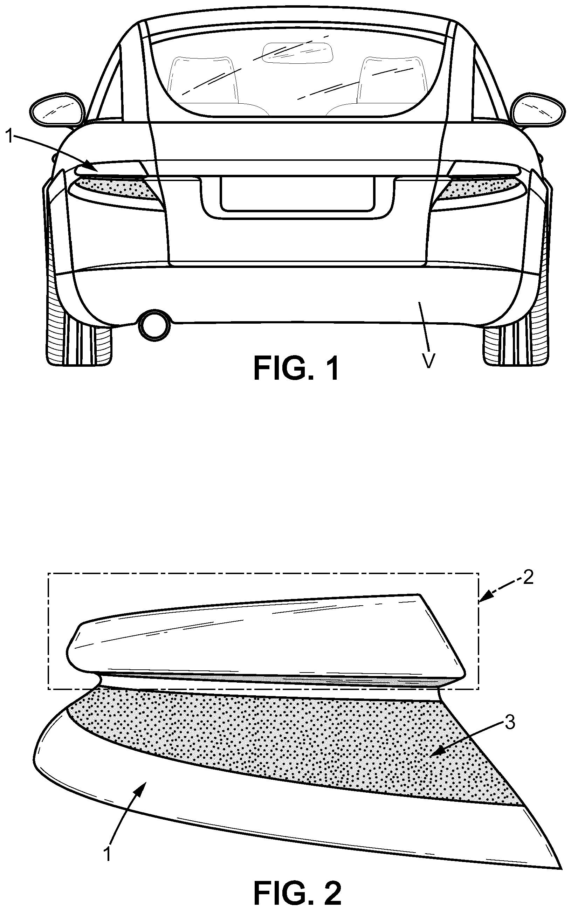

La **figure 1** illustre la face arrière d'un véhicule automobile V sur laquelle sont disposés deux dispositifs d'éclairage 1 au sens de l'invention, un sur la gauche de la face arrière et un sur la droite de la face arrière.

Le dispositif d'éclairage 1 est ici utilisé comme feu de signalisation arrière du véhicule. Cela signifie que ces feux ont pour fonction de signaler la position du véhicule, typiquement lorsque les conditions de visibilité sont réduites (conduite de nuit ou par temps de pluie par exemple). Ces feux peuvent également avoir pour fonction de signaler un changement de direction (feux clignotants), une action de freinage du véhicule (feux stop) ou encore que le véhicule procède à une marche arrière (feux de recul). A l'avant, il s'agit par exemple des feux de position ou des feux de type « Daytime Running Lamp », DRL, pour feux de circulation diurnes, allumés de jour.

Dans le cas particulier des feux de recul, ces feux peuvent avoir pour fonction d'avertir que le véhicule recule, mais aussi pour permettre au conducteur de voir l'environnement arrière lors d'une manoeuvre dans un environnement sombre.

La disposition et le nombre de dispositifs d'éclairage peut varier en fonction de la catégorie du véhicule (véhicule utilitaire ou véhicule de tourisme par exemple), en fonction de la réglementation en vigueur, etc.

La **figure 2** donne une vue rapprochée du dispositif d'éclairage 1. Comme détaillé ci-après, le dispositif d'éclairage 1 comporte un boîtier dans lequel est située au moins une source lumineuse.

En particulier, la figure 2 représente une paroi du dispositif d'éclairage destinée à fermer ou à recouvrir le boîtier du dispositif d'éclairage, et à s'intégrer dans la carrosserie. La paroi forme la peau externe du dispositif d'éclairage. Dans cet exemple, les dimensions de la paroi correspondent aux dimensions du boîtier. En variante, la paroi s'étend sur une partie de la carrosserie en prolongeant le boîtier pour que la surface d'éclairage soit plus étendue. Ainsi, sur la figure 2, la paroi est vue depuis l'extérieur du véhicule.

La paroi forme une excroissance 2 ici identifiée par un cadre en traits pointillés. Elle se situe au-dessus d'une zone 3 de la paroi réfléchissante vers l'extérieur, i.e. présentant des propriétés de réflexion vers l'extérieur. La surface réfléchissante vers l'extérieur est ici la surface extérieure de la paroi.

Toutefois, la paroi au niveau de la zone réfléchissante peut être une double paroi dans laquelle une paroi externe est translucide et protège une paroi interne qui présente, des propriétés de réflexion de la lumière.

Dans le cas d'une simple paroi, la zone réfléchissante 3 peut consister en un matériau réfléchissant, ou en un matériau couvert d'un matériau réfléchissant, préférentiellement de l'aluminium, par exemple en couche mince, par exemple déposée sous vide sur la paroi. La zone réfléchissante 3 peut également consister en un surmoulage d'un film réfléchissant sur la paroi, ou par un dépôt d'une encre réfléchissante par tampographie sur la paroi, etc. De façon préférée, il s'agit d'un dépôt d'un matériau réfléchissant par sérigraphie sur un film surmoulé sur la paroi. Ces traitements peuvent être réalisés sur la surface externe ou sur la surface interne de la paroi. Dans le cas d'une double paroi, ces traitements sont réalisés de préférence sur la surface externe ou sur la surface interne de la paroi interne, ou encore sur la surface interne de la paroi externe.

En variante encore, la matière du corps de la paroi enferme des particules réfléchissantes pour former la zone réfléchissante. Dans cette variante, la zone réfléchissante est donc constituée par le corps même de la paroi.

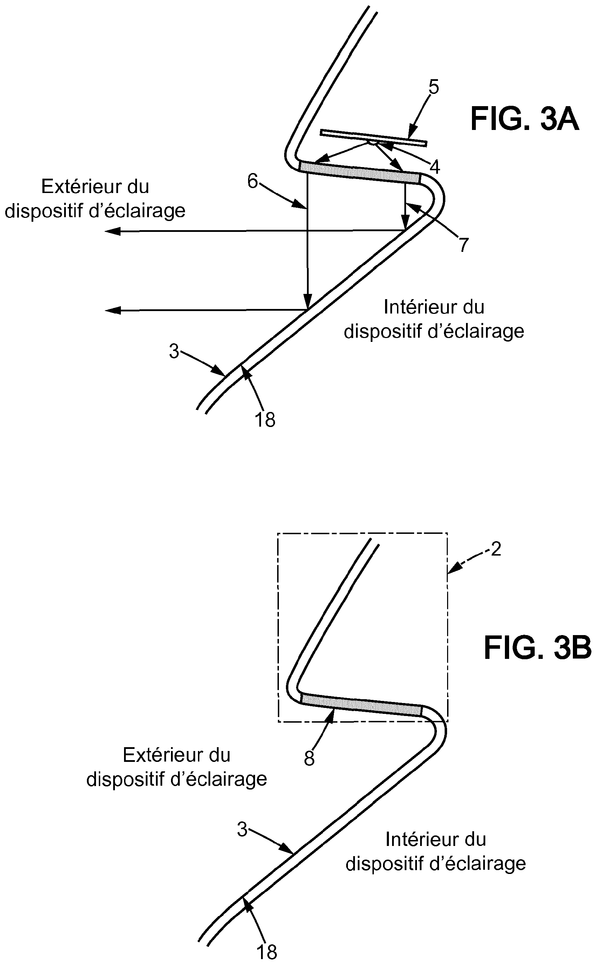

Les **figures 3A** et **3B** donnent une vue en coupe d'une partie du dispositif d'éclairage, dans un premier mode de réalisation.

Une paroi 18 délimite un espace intérieur au dispositif d'éclairage et un espace extérieur au dispositif d'éclairage, comme directement indiqué sur la figure 3A. Cette paroi 18 est typiquement fabriquée par thermo-moulage, par moulage par injection ou tout autre procédé de fabrication de pièce en matière plastique, ou constitué de tout type de matériau adapté. A l'intérieur de l'excroissance 2 est située une première source lumineuse comportant au moins une diode électroluminescente 4, par exemple montée sur un circuit imprimé 5. En variante, la diode 4 est montée sur un support de tout autre type adapté, par exemple un montage de type « submount » sur un radiateur. En variante encore, la source lumineuse est de tout autre type adapté.

La paroi 18 présente, pour une vue en coupe, une forme de S. Cette forme permet d'intégrer aisément la première source lumineuse dans la paroi (au niveau de l'excroissance 2) et d'orienter les faisceaux lumineux vers la zone réfléchissante 3. En variante, la paroi 18 peut, également pour une vue en coupe, prendre une forme de Z pour laquelle les angles de la paroi sont plus prononcés. D'autres variantes de formes peuvent être envisagées, comme par exemple une forme de S ou de Z inversé pour laquelle l'excroissance se situerait en dessous de la zone réfléchissante 3 ou toute autre forme adaptée.

La première source lumineuse peut également comporter un collimateur.

On peut prévoir entre une et jusqu'à plusieurs dizaines de diodes électroluminescentes. La diode électroluminescente 4 peut être de type chromatique (énergie concentrée sur une plage étroite de longueur d'onde telle que de 20 à 40 nm de largeur de bande) ou encore de type blanche (l'énergie est répartie dans le visible sur au moins une partie de la gamme de longueurs d'onde de 380 à 780 nm, par exemple grâce à un matériau phosphorescent de type phosphore). La première source lumineuse peut également comporter des lampes électriques classiques telles que des lampes à incandescence, par exemple halogène.

Les faisceaux lumineux générés par la diode 4, par exemple représentés par des flèches 6 et 7, se propagent brièvement dans l'excroissance 2 avant de passer à travers une première surface de sortie de lumière 8, comme illustré sur la figure 3B sur laquelle la zone correspondante de l'excroissance 2 est encadrée. L'intérieur de l'excroissance 2 peut comporter un jeu de miroirs afin de focaliser les faisceaux lumineux sur la surface de sortie de lumière 8.

De façon préférée, la surface de sortie de lumière 8 comprend un matériau rendant possible la transmission des faisceaux lumineux. La surface de sortie de lumière est par exemple réalisée par une zone claire et transparente de la paroi. Typiquement, ce matériau est un plastique transparent ou translucide tel qu'un polyméthacrylate de méthyle. Ce matériau peut également présenter des propriétés de diffraction ou de réfraction afin par exemple de focaliser les faisceaux lumineux sur la zone réfléchissante 3. Une telle surface de sortie de lumière peut s'obtenir par moulage bord à bord avec le reste de la paroi ou par surmoulage.

La surface de sortie de lumière 8 peut comprendre différentes couches de matériaux différents pour rendre possible des effets lumineux.

En outre, des reliefs prismatiques ou lenticulaires peuvent être également prévus dans la matière de la zone de la paroi formant la surface de sortie de lumière 8.

Après avoir traversé la surface de sortie de lumière 8, des faisceaux lumineux 6 et 7 sont réfléchis au niveau de la zone réfléchissante 3 de la paroi 18. La zone réfléchissante 3 est aménagée en regard de la première source lumineuse. Ainsi, les faisceaux lumineux 6 et 7 générés par la première source lumineuse traversent une zone à l'extérieur du dispositif d'éclairage et se réfléchissent sur la zone réfléchissante de la paroi pour générer un éclairage apparent depuis la paroi 18.

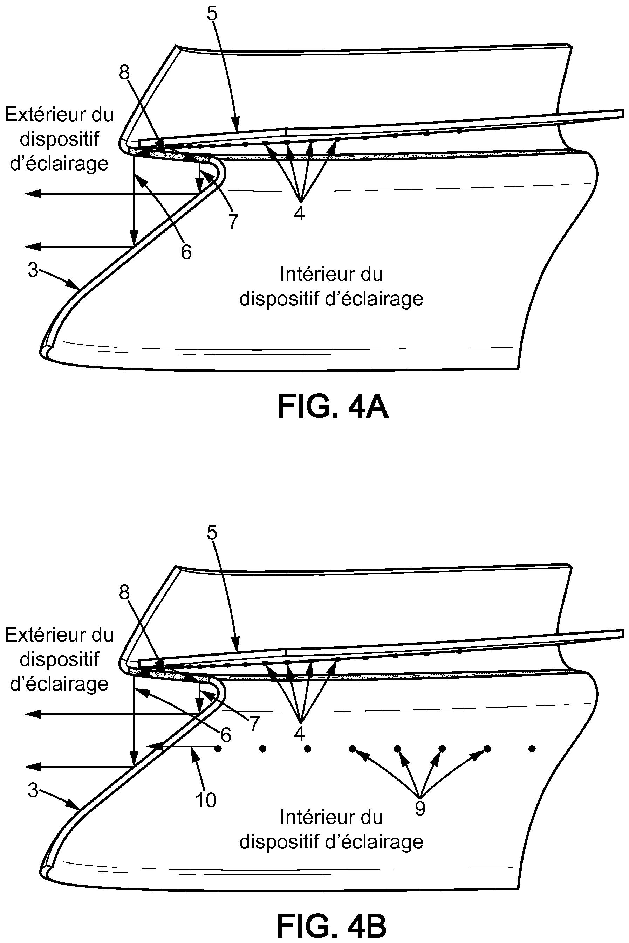

La **figure 4A** présente une vue en perspective de l'intérieur du dispositif d'éclairage, dans le premier exemple ne comportant pas toutes les caractéristiques techniques de l'invention. Comme présenté sur cette figure, la forme du circuit imprimé 5, de la surface de sortie de lumière 8 et donc de la paroi 18 peut être incurvée par rapport à un axe de révolution vertical.

La **figure 4B** présente une vue en perspective de l'intérieur du dispositif d'éclairage dans un mode de réalisation.

Selon l'invention, le dispositif d'éclairage comporte également au moins une deuxième source lumineuse 9 située à l'intérieur du dispositif d'éclairage, au niveau de la zone réfléchissante 3. Une partie de la zone réfléchissante 3 présente alors également des propriétés de transmission de la lumière de sorte qu'un faisceau lumineux 10 généré par la deuxième source lumineuse 9 puisse traverser la paroi au niveau de ladite partie de la zone réfléchissante.

Dans ce mode de réalisation, la paroi du dispositif d'éclairage est destinée à fermer la totalité boîtier du dispositif d'éclairage dans lequel sont comprises la première et la deuxième source lumineuse.

On entend par « deuxième source lumineuse située dans l'espace intérieur, au niveau de la zone réfléchissante » que la deuxième source lumineuse est apte à générer des faisceaux lumineux directement projetés sur la face interne de la zone réfléchissante de la paroi 18. En variante ne faisant pas partie de l'invention, un jeu d'un ou plusieurs réflecteur(s) situé(s) dans le boîtier du dispositif d'éclairage 1 peut être utilisé pour que les faisceaux projetés sur la face interne de la paroi 18 proviennent indirectement de la première source lumineuse.

La deuxième source lumineuse peut comporter les mêmes éléments que ceux décrits ci-avant pour la première source lumineuse.

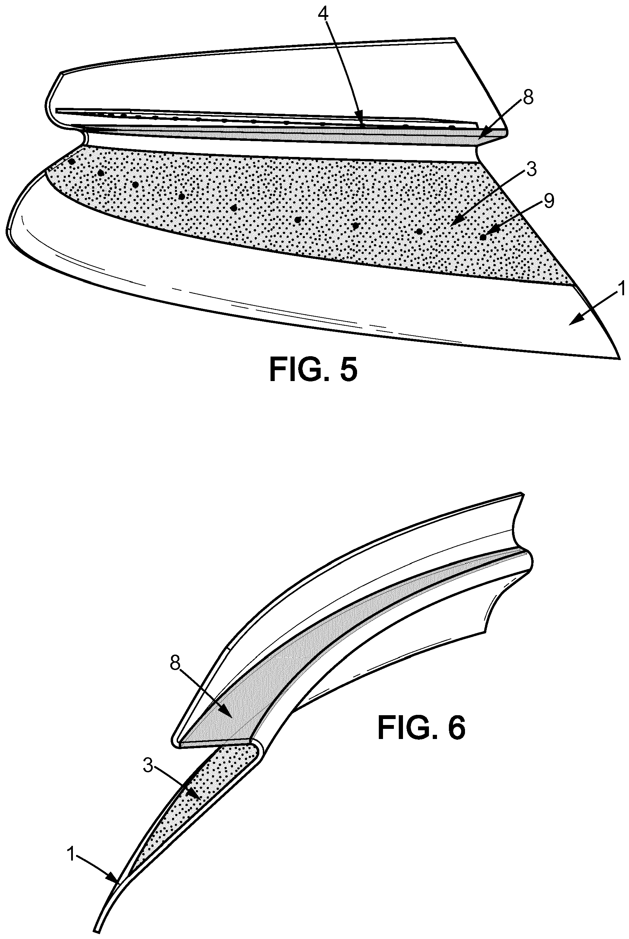

La **figure 5** donne une vue rapprochée du dispositif d'éclairage 1, selon le mode de réalisation. Les deuxièmes sources lumineuses 9 sont ici représentées par transparence mais sont biens situées sous la zone réfléchissante 3.

La **figure 6** présente une vue en perspective de la paroi 18 du dispositif d'éclairage 1 des figures 1 à 5.

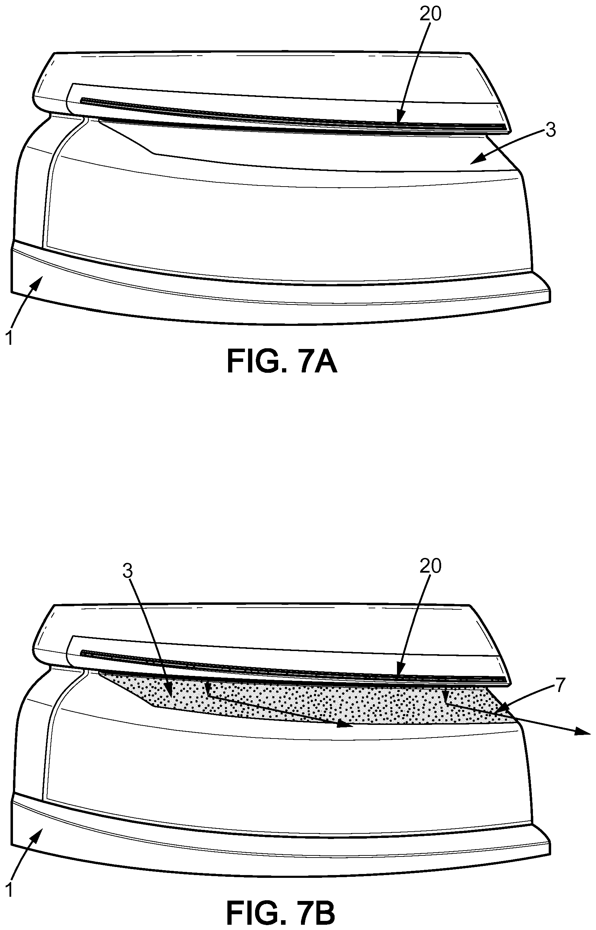

La **figure 7A** présente une illustration en trois dimensions du dispositif d'éclairage 1 dans un état éteint. Le dispositif d'éclairage 1 comporte ici, au niveau de l'excroissance, une deuxième surface de sortie de lumière 20 aménagée pour qu'un faisceau lumineux généré par la première source lumineuse et/ou une source lumineuse auxiliaire se propage directement vers l'espace extérieur sans être réfléchi sur la zone réfléchissante. La source lumineuse auxiliaire peut comporter les mêmes éléments que ceux décrits ci-avant pour la première et la deuxième source lumineuse.

La deuxième surface de sortie de lumière 20 peut être comblée par les mêmes matériaux que ceux décrits ci-avant pour la première surface de sortie de lumière 8.

La **figure 7B** présente une illustration en trois dimensions du dispositif d'éclairage 1 dans un état allumé. Sur cette figure, la première source lumineuse génère des faisceaux lumineux, comme le faisceau lumineux 7, qui sont réfléchis sur la zone réfléchissante 3.

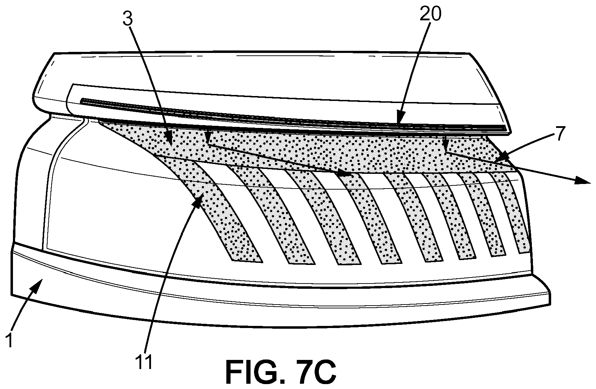

En variante, comme illustré sur la **figure 7C** représentant un autre exemple de dispositif d'éclairage 1, dans un état allumé, le dispositif d'éclairage 1 comporte d'autres zones lumineuses, comme les hachures 11. Ces zones sont par exemple constituées d'un matériau translucide apte à laisse passer des faisceaux lumineux générés par une source lumineuse située à l'intérieur du dispositif d'éclairage 1. Cette source lumineuse peut être la deuxième source lumineuse mentionnée ci-avant ou une source lumineuse spécifiquement prévue pour les hachures 11.

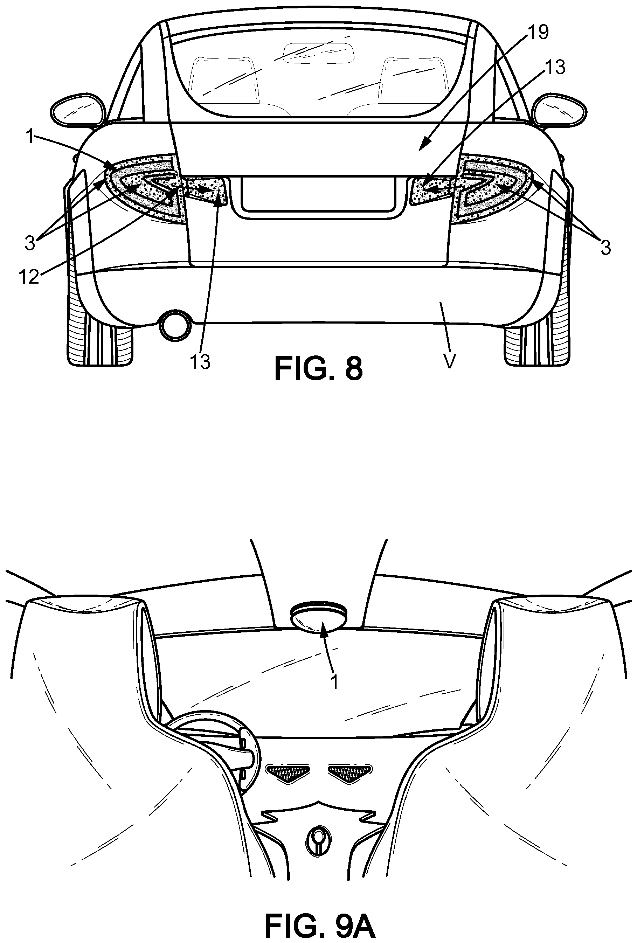

La figure 8 illustre ne comportant pas toutes les caractéristiques techniques de l'invention, dans lequel le dispositif d'éclairage a une excroissance en forme générale de G (pour l'aile gauche) et une zone réfléchissante 3 s'étendant à la fois autour et à l'intérieur de l'excroissance 2. Cet exemple montre la variété de formes possibles à la fois pour l'excroissance 2 et pour la zone réfléchissante 3. D'une manière générale, l'excroissance 2 de la paroi et la zone réfléchissante ont une forme et un agencement relatif de tout type adapté pour produire un éclairage par l'extérieur. Des très nombreuses possibilités de designs sont possibles et envisageables.

Le dispositif d'éclairage illustré sur la figure 8 présente également une autre caractéristique importante, permise par sa forme en G sans pour autant que cette forme ne soit nécessaire, à savoir l'éclairage d'une partie mobile de la carrosserie, une porte de coffre 19 dans cet exemple. Le dispositif d'éclairage 1 et une zone réfléchissante 13 présente sur la porte de coffre sont agencés pour qu'un faisceau lumineux 12 soit généré par la première source lumineuse en direction de la surface 13. Un éclairage apparent depuis la porte de coffre 19 est ainsi rendu possible sans avoir à intégrer de sources lumineuses dans cette porte de coffre 19.

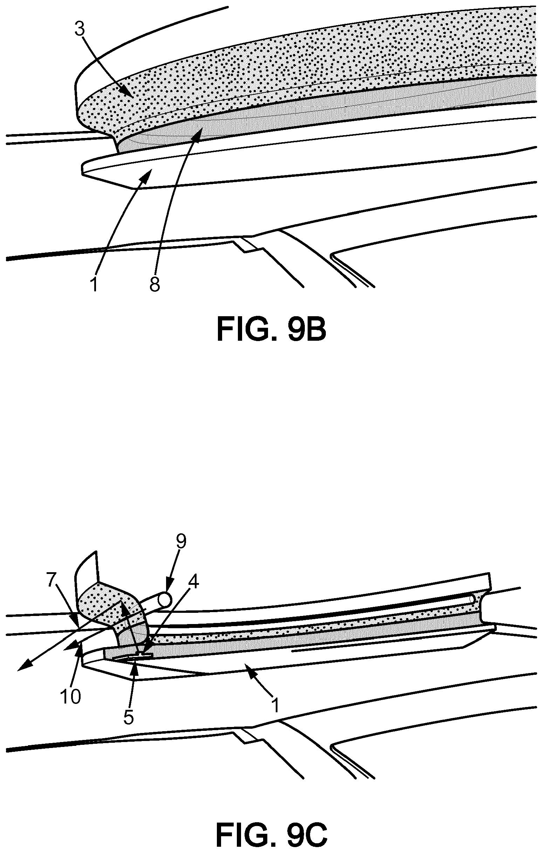

Les **figures 9A**, **9B** et **9C** illustrent une autre application possible de la présente invention à un éclairage intérieur d'un véhicule automobile.

Comme le présente la figure 9A, le dispositif d'éclairage 1 prend ici la forme d'un dôme situé à l'intérieur du véhicule automobile, sur le plafond et proche du pare-brise. Ce dôme a pour fonction d'éclairer, soit de manière diffuse, soit de manière plus prononcée (typiquement en mode liseuse) l'intérieur du véhicule.

Sur la figure 9B est représentée la zone réfléchissante 3, ici située au-dessus de la surface de sortie de lumière 8, à partir de laquelle sont transmis les faisceaux lumineux générés par la première source lumineuse 4. L'excroissance est formée par le bord circulaire inférieur du dôme et le dôme délimite au-dessus de l'excroissance une gorge annulaire. La zone réfléchissante est prévue dans la gorge, surplombant l'excroissance, et formant ainsi un anneau circulaire au-dessus de l'excroissance. En variante cependant, le dispositif d'éclairage a une forme de tout type adapté, plus particulièrement l'excroissance et la zone réfléchissante ont une forme et un agencement de tout type adapté pour produire un éclairage par réflexion fonctionnel pour l'utilisateur. Pour un éclairage intérieur de type dôme, de façon avantageuse, comme illustré, la zone réfléchissante surplombe l'excroissance.

La figure 9C est une vue en coupe illustrant l'intérieur du dispositif et détaillant son fonctionnement dans cette configuration pour éclairage intérieur.

La première source lumineuse comprend les diodes électroluminescentes à partir desquelles sont générées des faisceaux lumineux tels que le faisceau lumineux 7.

Une deuxième source lumineuse 9 est ici formée par un guide de lumière circulaire longeant l'intérieur de la zone réfléchissante, par alimenté en lumière par une ou plusieurs diodes électroluminescentes agencés en regard d'une ou plusieurs entrées de lumière du guide. Cette deuxième source lumineuse génère des faisceaux lumineux comme le faisceau lumineux 10 qui se propage de l'intérieur vers l'extérieur du dispositif d'éclairage 1 en traversant la zone réfléchissante 3. En effet, la zone réfléchissante 3 présente ici des propriétés de réflexion lumineuse et des propriétés de transmission de la lumière.

La présente invention ne se limite pas aux formes de réalisation décrites ci-avant à titre d'exemples; elle s'étend à d'autres variantes.

Ainsi, on a décrit ci-avant un mode de réalisation dans lequel le dispositif d'éclairage présente des formes circulaires. L'invention n'est pas limitée à de telles formes et s'étend à toute forme susceptible de mettre en oeuvre les fonctions décrites dans les revendications.

## Revendications

1. Dispositif d'éclairage (1) pour véhicule automobile (V) comprenant :
- une paroi délimitant un espace intérieur au dispositif d'éclairage et un espace extérieur au dispositif d'éclairage et comportant au moins une excroissance ; et
- au moins une première source lumineuse (5 ; 4) située dans l'espace intérieur et à l'intérieur de ladite excroissance ;
la paroi comprenant aussi une zone réfléchissante (3) présentant des propriétés de réflexion lumineuse, et aménagée en regard de la première source lumineuse, de telle sorte que la première source lumineuse soit apte à générer un faisceau lumineux (6 ; 7) traversant la paroi, se propageant à l'extérieur du dispositif d'éclairage avant de se réfléchir sur la zone réfléchissante de la paroi pour générer un éclairage apparent depuis la paroi, le dispositif d'éclairage étant **caractérisé en ce que** :
le dispositif d'éclairage comporte en outre au moins une deuxième source lumineuse (9) située dans l'espace intérieur, au niveau de la zone réfléchissante présentant des propriétés de réflexion lumineuse ;
au moins une partie de la zone réfléchissante présentant des propriétés de réflexion lumineuse présente également des propriétés de transmission de la lumière de sorte qu'un faisceau lumineux généré par la deuxième source lumineuse puisse traverser la paroi au niveau de ladite partie de la zone réfléchissante.

2. Dispositif d'éclairage selon la revendication 1, **caractérisé en ce que** la zone réfléchissante présente un taux de réflexion d'au moins 30 %.

3. Dispositif d'éclairage selon la revendication 2, **caractérisé en ce que** l'excroissance comporte une première surface de sortie de lumière (8) aménagée en regard de la zone réfléchissante (3) pour qu'un faisceau lumineux généré par la première source lumineuse se réfléchisse sur la zone réfléchissante.

4. Dispositif d'éclairage selon la revendication 3, **caractérisé en ce que** l'excroissance comporte en outre une deuxième surface de sortie de lumière (20) aménagée pour qu'un faisceau lumineux généré par la première source lumineuse et/ou une source lumineuse auxiliaire située dans l'excroissance se propage directement vers l'espace extérieur sans être réfléchi sur la zone réfléchissante.

5. Dispositif d'éclairage selon la revendication 4, **caractérisé en ce que** la première surface de sortie de lumière et/ou la deuxième surface de sortie de lumière comprend un matériau possédant des propriétés de transmission lumineuse.

6. Dispositif d'éclairage selon l'une des revendications précédentes, **caractérisé en ce que** ladite au moins partie de la zone réfléchissante présentant également des propriétés de transmission de la lumière présente un taux de transmission d'au moins 30 %.

7. Dispositif d'éclairage selon l'une des revendications précédentes, **caractérisé en ce que** la première et/ou la deuxième source lumineuse comporte au moins une diode électroluminescente (4).

8. Dispositif d'éclairage selon l'une des revendications précédentes, **caractérisé en ce que** la paroi est fabriquée par moulage par injection.

9. Feu de signalisation d'un véhicule automobile, **caractérisé en ce qu'**il est formé par le dispositif d'éclairage (1) selon l'une des revendications précédentes.

## Patentansprüche

1. Beleuchtungsvorrichtung (1) für ein Kraftfahrzeug (V) umfassend:
- eine Wand, die einen inneren Raum der Beleuchtungsvorrichtung und einen äußeren Raum der Beleuchtungsvorrichtung begrenzt und mindestens einen Vorsprung aufweist; und
- mindestens eine erste Lichtquelle (5; 4), die sich in dem inneren Raum und innerhalb des Vorsprungs befindet;
wobei die Wand ebenfalls einen reflektierenden Bereich (3) umfasst, der Lichtreflexionseigenschaften aufweist und gegenüber der ersten Lichtquelle so eingerichtet ist, dass die erste Lichtquelle imstande ist, ein Lichtbündel (6; 7) zu reflektieren, das durch die Wand hindurchgeht, sich außerhalb der Beleuchtungsvorrichtung ausbreitet, bevor es auf dem reflektierenden Bereich der Wand reflektiert wird, um eine sichtbare Beleuchtung von der Wand aus zu erzeugen, wobei die Beleuchtungsvorrichtung **dadurch gekennzeichnet ist, dass**:
die Beleuchtungsvorrichtung ferner mindestens eine zweite Lichtquelle (9) aufweist, die sich in dem inneren Raum an dem reflektierenden Bereich befindet, der Lichtreflexionseigenschaften aufweist;
wobei mindestens ein Abschnitt des reflektierenden Bereichs, der Lichtreflexionseigenschaften aufweist, ebenfalls Durchlässigkeitseigenschaften des Lichts aufweist, so dass ein Lichtbündel, das von der zweiten Lichtquelle erzeugt wird, an dem Abschnitt des reflektierenden Bereichs durch die Wand hindurchgehen kann.

2. Beleuchtungsvorrichtung nach Anspruch 1, **dadurch gekennzeichnet, dass** der reflektierende Bereich einen Reflexionsgrad von mindestens 30 % aufweist.

3. Beleuchtungsvorrichtung nach Anspruch 2, **dadurch gekennzeichnet, dass** der Vorsprung eine erste Lichtaustrittsfläche (8) aufweist, die gegenüber dem reflektierenden Bereich (3) eingerichtet ist, damit ein Lichtbündel, das von der ersten Lichtquelle erzeugt wird, auf dem reflektierenden Bereich reflektiert wird.

4. Beleuchtungsvorrichtung nach Anspruch 3, **dadurch gekennzeichnet, dass** der Vorsprung ferner eine zweite Lichtaustrittsfläche (20) aufweist, die dafür eingerichtet ist, dass sich ein Lichtbündel, das von der ersten Lichtquelle und/oder einer Hilfslichtquelle, die sich in dem Vorsprung befindet, erzeugt wird, direkt in Richtung des inneren Raums ausbreitet, ohne auf dem reflektierenden Bereich reflektiert zu werden.

5. Beleuchtungsvorrichtung nach Anspruch 4, **dadurch gekennzeichnet, dass** die erste Lichtaustrittsfläche und/oder die zweite Lichtaustrittsfläche ein Material umfasst, das Lichtdurchlässigkeitseigenschaften aufweist.

6. Beleuchtungsvorrichtung nach einem der vorhergehenden Ansprüche, **dadurch gekennzeichnet, dass** der mindestens eine Abschnitt des reflektierenden Bereichs, der ebenfalls Durchlässigkeitseigenschaften des Lichts aufweist, einen Durchlässigkeitsgrad von mindestens 30 % aufweist.

7. Beleuchtungsvorrichtung nach einem der vorhergehenden Ansprüche, **dadurch gekennzeichnet, dass** die erste und/oder die zweite Lichtquelle mindestens eine Leuchtdiode (4) aufweist.

8. Beleuchtungsvorrichtung nach einem der vorhergehenden Ansprüche, **dadurch gekennzeichnet, dass** die Wand durch Spritzgießen hergestellt ist.

9. Signalisierungslicht eines Kraftfahrzeugs, **dadurch gekennzeichnet, dass** es von der Beleuchtungsvorrichtung (1) nach einem der vorhergehenden Ansprüche gebildet ist.

## Claims

1. Lighting device (1) for a motor vehicle (V), comprising:
- a wall delimiting a space internal to the lighting device and a space external to the lighting device and comprising at least one protuberance; and
- at least one first light source (5; 4) situated in the internal space and inside said protuberance;
the wall also comprising a reflecting zone (3) having light reflection properties, and formed facing the first light source, such that the first light source is able to generate a light beam (6; 7) passing through the wall, that is propagated outside the lighting device before being reflected on the reflecting zone of the wall to generate an apparent lighting from the wall, wherein the lighting device is **characterized in that**:
the lighting device further comprises at least one second light source (9) situated in the internal space, in the reflecting zone having light reflection properties;
at least a part of the reflecting zone having light reflection properties also has light transmission properties such that a light beam generated by the second light source can pass through the wall in said part of the reflecting zone.

2. Lighting device according to Claim 1, **characterized in that** the reflecting zone has a reflection rate of at least 30%.

3. Lighting device according to Claim 2, **characterized in that** the protuberance comprises a first light output surface (8) formed facing the reflecting zone (3) for a light beam generated by the first light source to be reflected on the reflecting zone.

4. Lighting device according to Claim 3, **characterized in that** the protuberance further comprises a second light output surface (20) formed for a light beam generated by the first light source and/or an auxiliary light source situated in the protuberance to be propagated directly toward the outside space without being reflected on the reflecting zone.

5. Lighting device according to Claim 4, **characterized in that** the first light output surface and/or the second light output surface comprises a material having light transmission properties.

6. Lighting device according to one of the preceding claims, **characterized in that** said at least part of the reflecting zone also having light transmission properties has a transmission rate of at least 30%.

7. Lighting device according to one of the preceding claims, **characterized in that** the first and/or the second light source comprises at least one light-emitting diode (4).

8. Lighting device according to one of the preceding claims, **characterized in that** the wall is manufactured by injection molding.

9. Signaling light for a motor vehicle, **characterized in that** it is formed by the lighting device (1) according to one of the preceding claims.
